# EUROPEAN PATENT APPLICATION

(11) **EP 4 822 156 A2**
(43) Date of publication of application: **14.10.2026**
(21) Application number: 26172052.8
(22) Date of filing: 13.04.2026
(51) Int. Cl.: F02C 7/20, F02K 3/02, F02C 6/20

(54) **OPEN ROTOR AIRCRAFT PROPULSION SYSTEM ENGINE MOUNT ASSEMBLIES**

(30) Priority: 12.04.2025 US 202519177541
(71) Applicant: RTX Corporation, Farmington, CT 06032 (US)
(72) Inventor: SOBANSKI, Jon E., Glastonbury, 06033 (US); MORTON, Jeffrey T., Glastonbury, 06033 (US); BREAULT, Andrew E., Bolton, 06043 (US)
(74) Representative: Dehns

(57) **Abstract**

An assembly for an aircraft propulsion system (20) includes a housing structure (54), a guide vane structure (36), and a front mount assembly (148). The housing structure (54) includes an engine case assembly (106). The engine case assembly (106) includes a front center body (122). The guide vane structure (36) includes a guide vane structure base (50). The front mount assembly (148) is mounted on the front center body (122). The front mount assembly (148) is disposed axially coincident with the guide vane structure (36). The front mount assembly (148) includes at least one pylon attachment linkage (154).

## Description

### BACKGROUND

### 1. Technical Field

This invention relates generally to an aircraft and, more particularly, to an open rotor propulsion system for the aircraft.

### 2. Background Information

Various types and configurations of aircraft propulsion systems are known in the art including those with one or more open propulsor rotors. While these known aircraft propulsion systems have various benefits, there is still room in the art for improvement.

### SUMMARY

According to an aspect of the present invention, an assembly for an aircraft propulsion system includes an open propulsor rotor, a housing structure, a guide vane structure, a front mount assembly, a compressor section, a combustor section, a turbine section, and a flowpath. The open propulsor rotor includes a plurality of open propulsor blades arranged circumferentially around an axis. Each of the plurality of open propulsor blades projects radially out into an environment external to the aircraft propulsion system. The housing structure includes an upstream housing end. The upstream housing end is disposed downstream of the plurality of open propulsor blades. The housing structure includes an engine case assembly and a nacelle structure. The engine case assembly includes a front center body at the upstream housing end. The front center body includes an outer radial side. The nacelle structure is disposed radially outboard of the engine case assembly and covering the outer radial side. The nacelle structure forms at least a portion of an exterior flow boundary for the aircraft propulsion system that borders the environment external to the aircraft propulsion system. The guide vane structure includes a guide vane structure base disposed at the exterior flow boundary. The front mount assembly is mounted on the outer radial side. The front mount assembly is disposed axially coincident with the guide vane structure. The front mount assembly includes at least one pylon attachment linkage. The compressor section, the combustor section, and the turbine section are each housed within the engine case assembly. The turbine section includes a turbine rotor operatively coupled to the open propulsor rotor. The turbine rotor is configured to drive rotation of the open propulsor rotor about the axis. The flowpath extends through the compressor section, the combustor section, and the turbine section from an inlet into the flowpath to an exhaust from the flowpath. The inlet is formed by the front center body.

Optionally, and in accordance with the above, the assembly may further include a pylon structure, and the front mount assembly may mount the front center body to the pylon structure.

Optionally, and in accordance with any of the above, the pylon structure may include at least one beam extending through the housing structure, the at least one beam may form an end portion of the pylon structure between the front center body and the guide vane structure base, and the front mount assembly may be mounted to the pylon structure at the end portion.

Optionally, and in accordance with any of the above, the at least one pylon attachment linkage may mount the front center body to the pylon structure.

Optionally, and in accordance with any of the above, the guide vane structure may further include a plurality of open guide vanes projecting radially outward from the guide vane structure base.

Optionally, and in accordance with any of the above, the guide vane structure base may include at least one front mount assembly access panel at the exterior flow boundary, and the at least one front mount assembly access panel may be disposed adjacent the front mount assembly.

Optionally, and in accordance with any of the above, each of the at least one front mount assembly access panel may be disposed between a respective pair of circumferentially adjacent open guide vanes of the plurality of open guide vanes.

Optionally, and in accordance with any of the above, the front mount assembly may form a first vertical load path between the engine case assembly and the pylon structure.

Optionally, and in accordance with any of the above, the assembly may further include an intermediate mount assembly and a rear mount assembly, the intermediate mount assembly and the rear mount assembly may further mount the engine case assembly to the pylon structure.

Optionally, and in accordance with any of the above, the engine case assembly may further include an intermediate case and a mid-turbine frame, the intermediate case may be disposed at the compressor section, the mid-turbine frame may be disposed at the turbine section, the intermediate mount assembly may mount the intermediate case to the pylon structure, and the rear mount assembly may mount the mid-turbine frame to the pylon structure.

Optionally, and in accordance with any of the above, the engine case assembly may further include an intermediate case and a turbine exhaust case, the intermediate case may be disposed at the compressor section, the turbine exhaust case may form a portion of the flowpath downstream of the turbine section, the intermediate mount assembly may mount the intermediate case to the pylon structure, and the rear mount assembly may mount the turbine exhaust case to the pylon structure.

Optionally, and in accordance with any of the above, the front mount assembly may further form a first lateral load path between the engine case assembly and the pylon structure, the intermediate mount assembly may form a torque load path and a thrust load path between the engine case assembly and the pylon structure, and the rear mount assembly may form a second vertical load path and a second lateral load path between the engine case assembly and the pylon structure.

Optionally, and in accordance with any of the above, the intermediate mount assembly may form a torque load path, a thrust load path, and a first lateral load path between the engine case assembly and the pylon structure, and the rear mount assembly may form a second vertical load path and a second lateral load path between the engine case assembly and the pylon structure.

Optionally, and in accordance with any of the above, the front mount assembly may further form a first lateral load path between the engine case assembly and the pylon structure, the intermediate mount assembly may form a thrust load path between the engine case assembly and the pylon structure, and the rear mount assembly may form a second vertical load path, a second lateral load path, and a torque load path between the engine case assembly and the pylon structure.

Optionally, and in accordance with any of the above, the intermediate mount assembly may form a thrust load path and a first lateral load path between the engine case assembly and the pylon structure, and the rear mount assembly may form a second vertical load path, a second lateral load path, and a torque load path between the engine case assembly and the pylon structure.

According to another aspect of the present invention, an assembly for an aircraft propulsion system includes a propulsor rotor, a housing structure, a guide vane structure, a front mount assembly, a compressor section, a combustor section, a turbine section, and a flowpath. The propulsor rotor includes a plurality of propulsor blades arranged circumferentially around an axis. The housing structure includes an upstream housing end. The upstream housing end is disposed downstream of the plurality of propulsor blades. The housing structure includes an engine case assembly and a nacelle structure. The nacelle structure is disposed radially outboard of the engine case assembly. The nacelle structure forms an exterior flow boundary for the aircraft propulsion system. The guide vane structure includes a guide vane structure base disposed at the exterior flow boundary. The front mount assembly is disposed radially between the engine case assembly and the guide vane structure base. The front mount assembly is mounted on the engine case assembly. The compressor section, the combustor section, and the turbine section are each housed within the engine case assembly. The turbine section includes a turbine rotor operatively coupled to the open propulsor rotor. The turbine rotor is configured to drive rotation of the open propulsor rotor about the axis. The flowpath extends through the compressor section, the combustor section, and the turbine section from an inlet into the flowpath to an exhaust from the flowpath. The inlet is formed by the engine case assembly at the upstream housing end.

Optionally, and in accordance with the above, the assembly may further include a pylon structure and a turbine engine, the turbine engine may include the compressor section, the combustor section, the turbine section, the flowpath and the engine case assembly, the front mount assembly may mount the engine case assembly to the pylon structure.

Optionally, and in accordance with any of the above, the pylon structure may include at least one beam extending through the housing structure, the at least one beam may form an end portion of the pylon structure radially between the front mount assembly and the plurality of open guide vanes, and the front mount assembly may be mounted to the pylon structure at the end portion.

According to another aspect of the present invention, an assembly for an aircraft propulsion system includes an open propulsor rotor, a housing structure, an open guide vane structure, a front mount assembly, a compressor section, a combustor section, a turbine section, and a flowpath. The open propulsor rotor includes a plurality of open propulsor blades arranged circumferentially around an axis. Each of the plurality of open propulsor blades projecting radially out into an environment external to the aircraft propulsion system. The housing structure includes an upstream housing end. The upstream housing end is disposed downstream of the plurality of open propulsor blades. The housing structure includes an engine case assembly and a nacelle structure. The engine case assembly includes a front center body at the upstream housing end. The nacelle structure is disposed radially outboard of the engine case assembly. The nacelle structure forms an exterior flow boundary for the aircraft propulsion system that borders the environment external to the aircraft propulsion system. The open guide vane structure includes a guide vane structure base. The guide vane structure base is mounted at the nacelle structure and further forms the exterior flow boundary. The front mount assembly is mounted on the front center body between the front center body and the guide vane structure base. The front mount assembly includes at least one pylon attachment linkage mounted to the front center body. The compressor section, the combustor section, and the turbine section are each housed within the engine case assembly. The turbine section includes a turbine rotor operatively coupled to the open propulsor rotor. The turbine rotor is configured to drive rotation of the open propulsor rotor about the axis. The flowpath extends through the compressor section, the combustor section, and the turbine section from an inlet into the flowpath to an exhaust from the flowpath. The inlet is formed by the front center body.

Optionally, and in accordance with the above, the assembly may further include a pylon structure and a turbine engine, the turbine engine may include the compressor section, the combustor section, the turbine section, the flowpath and the engine case assembly, and the front mount assembly may mount the front center body to the pylon structure.

The foregoing features and elements may be combined in various combinations without exclusivity, unless expressly indicated otherwise. For example, aspects and/or embodiments of the present invention may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 schematically illustrates a cutaway, side view of an aircraft propulsion system, in accordance with one or more embodiments of the present invention.
FIG. 2 schematically illustrates a cutaway, side view of a portion of the aircraft propulsion system, in accordance with one or more embodiments of the present invention.
FIG. 3 schematically illustrates a cutaway, side view of a portion of the aircraft propulsion system including a plurality of engine mount assemblies, in accordance with one or more embodiments of the present invention.
FIG. 4 schematically illustrates a cutaway, side view of a portion of the aircraft propulsion system including another plurality of engine mount assemblies, in accordance with one or more embodiments of the present invention.
FIG. 5 schematically illustrates a portion of the aircraft propulsion system including a front mount assembly taken along Line A-A of FIGS. 3 or 4, in accordance with one or more embodiments of the present invention.
FIG. 6 schematically illustrates a portion of the aircraft propulsion system including another front mount assembly taken along Line A-A of FIGS. 3 or 4, in accordance with one or more embodiments of the present invention.
FIGS. 7A-D schematically illustrate load paths formed by a plurality of engine mount assemblies of the aircraft propulsion system, in accordance with one or more embodiments of the present invention.
FIG. 8 schematically illustrates a cutaway view of a segmented guide vane structure in a stowed arrangement, in accordance with one or more embodiments of the present invention.
FIG. 9 schematically illustrates a cutaway view of the segmented guide vane structure of FIG. 8 in an open arrangement, in accordance with one or more embodiments of the present invention.
FIG. 10 schematically illustrates a cutaway view of another segmented guide vane structure in a stowed arrangement, in accordance with one or more embodiments of the present invention.
FIG. 11 schematically illustrates a cutaway view of the segmented guide vane structure of FIG. 10 in an open arrangement, in accordance with one or more embodiments of the present invention.
FIGS. 12A-B illustrate a plan view of guide vanes in various pitch positions, in accordance with one or more embodiments of the present invention.
FIG. 13 schematically illustrates aircraft propulsion system actuation systems controlled by multiple controllers, in accordance with one or more embodiments of the present invention.
FIG. 14 schematically illustrates a vane actuation system with a power source arrangement, in accordance with one or more embodiments of the present invention.
FIG. 15 schematically illustrates the vane actuation system with another power source arrangement, in accordance with one or more embodiments of the present invention.

### DETAILED DESCRIPTION

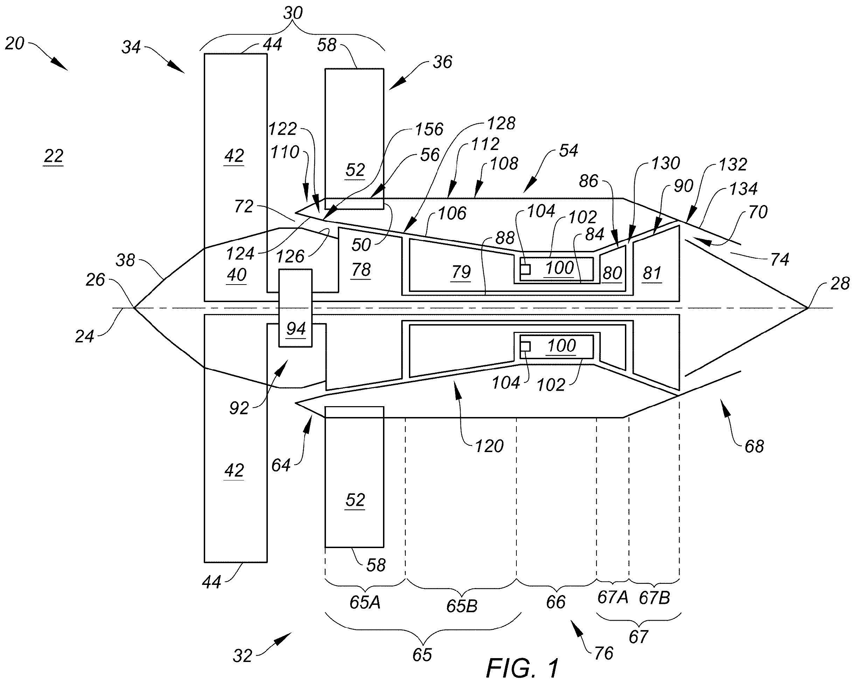

FIG. 1 is a schematic illustration of a propulsion system 20 for an aircraft. The aircraft may be an airplane, a drone (e.g., an unmanned aerial vehicle (UAV)), or any other manned or unmanned aerial vehicle or system. The aircraft propulsion system 20 may be configured as an open rotor propulsion system with a single open rotor and swirl recovery vane (SRV) architecture. Herein, the term "open" may describe a propulsion system section and/or a propulsion system component which is open to an environment 22 (e.g., an ambient environment) external to the aircraft propulsion system 20 and, more generally, the aircraft. However, aspects of the present invention may be equally applicable to some other aircraft propulsion system configurations including those having ducted propulsors.

The aircraft propulsion system 20 extends axially along an axis 24 between an upstream, forward end 26 of the aircraft propulsion system 20 and a downstream, aft end 28 of the aircraft propulsion system 20. The propulsion system axis 24 may be a centerline axis of the aircraft propulsion system 20 and/or a centerline axis of one or more members of the aircraft propulsion system 20. The propulsion system axis 24 may also or alternatively be a rotational axis of one or more members of the aircraft propulsion system 20. The aircraft propulsion system 20 of FIG. 1 includes an open rotor propulsion section 30 and a gas turbine engine 32.

The propulsion section 30 of FIG. 1 includes an open propulsor rotor 34 and an open guide vane structure 36. These propulsion section members 34 and 36 are un-ducted and/or unshrouded components of the aircraft propulsion system 20 and its propulsion section 30. In some embodiments, however, one or more of the propulsion section members 34 and 36 may be un-ducted yet may each include a small shroud. The propulsion section 30 also includes a nose cone 38 disposed at (e.g., on, adjacent or proximate) the propulsion system forward end 26. Briefly, this nose cone 38 may be configured as a spinner which is rotatable with the propulsor rotor 34 about the propulsion system axis 24. Alternatively, the nose cone 38 may be configured as a stationary structure of the propulsion section 30.

The propulsor rotor 34 includes a rotor base 40 (e.g., a disk or a hub) and a plurality of open propulsor blades 42 (e.g., airfoils). The propulsor blades 42 are arranged and may be equispaced circumferentially about the rotor base 40 and the propulsion system axis 24 in an array (e.g., a circular array). Each of the propulsor blades 42 is connected to (e.g., formed integral with or otherwise attached to) the rotor base 40. Each of the propulsor blades 42 projects spanwise along a span line of the respective propulsor blade 42 (e.g., radially relative to the propulsion system axis 24) out from an exterior surface of the rotor base 40, into the external environment 22, to an unshrouded distal tip 44 of the respective propulsor blade 42. Each propulsor blade 42 is thereby configured as an un-ducted and unshrouded propulsor blade 42 which is exposed to (e.g., disposed in) the surrounding external environment 22.

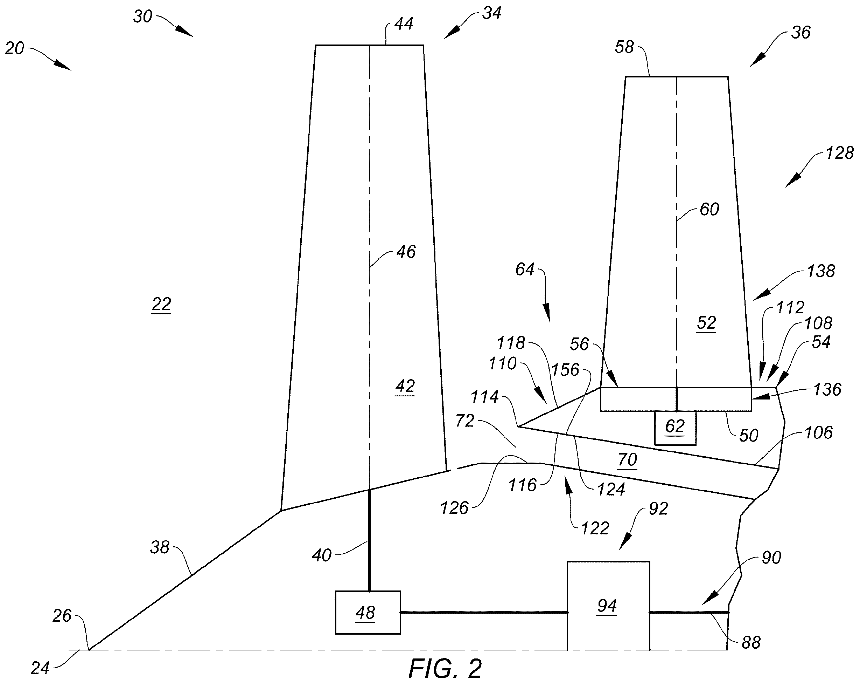

Referring to FIG. 2, each propulsor blade 42 may be configured to pivot about a respective blade pivot axis 46. This blade pivot axis 46 extends radially relative to the propulsion system axis 24. The blade pivot axis 46 of FIG. 2, for example, is arranged perpendicular to the propulsion system axis 24 when viewed, for example, in a longitudinal reference plane parallel to (e.g., including) the propulsion system axis 24 (e.g., the plane of FIG. 2). Each propulsor blade 42 of FIG. 2 is operatively coupled with a blade actuation system 48. This blade actuation system 48 is configured to pivot each propulsor blade 42 about its own respective blade pivot axis 46. By pivoting each propulsor blade 42 about its blade pivot axis 46, a pitch of the respective propulsor blade 42 may be changed. Note, while the blade pivot axis 46 is shown in FIG. 2 as being perpendicular to the propulsion system axis 24, it is contemplated that this blade pivot axis 46 may or may not be coincident with the propulsion system axis 24. Moreover, it is contemplated that each blade pivot axis 46 may alternatively be angularly offset from the propulsion system axis 24 by an acute angle or an obtuse angle when viewed, for example, in the longitudinal reference plane. Of course, it is contemplated that some or all of the propulsor blades 42 may be alternatively moved to change the propulsor blade pitch. Moreover, it is contemplated that some or all of the propulsor blades 42 may alternatively be fixed pitch propulsor blades in other embodiments.

The guide vane structure 36 of FIG. 1 includes a guide vane structure base 50 (e.g., a support ring, a skinned support frame, etc.) and a plurality of the open exit guide vanes 52 (e.g., airfoils). Briefly, at least (or only) an outer radial side of the structure base 50 and an outer radial side of a stationary housing structure 54 for the aircraft propulsion system 20 collectively form an aerodynamic exterior flow boundary 56 of the aircraft propulsion system 20 (e.g., a propulsion system mold line) which borders the external environment 22. The guide vanes 52, sometimes referred to as "swirl recovery vanes (SRVs), are arranged and may be equispaced circumferentially about the propulsion system axis 24 and the structure base 50 in an array (e.g., a circular array). This guide vane structure 36 and its guide vanes 52 are arranged axially next to (e.g., adjacent) the propulsor rotor 34 and its propulsor blades 42. The guide vane structure 36 and its guide vanes 52 of FIG. 1, for example, are arranged downstream of the propulsor rotor 34 and its propulsor blades 42, for example, without (e.g., any) other elements axially therebetween to obstruct, turn and/or otherwise influence the air propelled by the propulsor rotor 34 to the guide vane structure 36. Each of the guide vanes 52 of FIG. 1 is coupled to the structure base 50. Each of the guide vanes 52 projects spanwise along a span line of the respective guide vane 52 (e.g., radially relative to the propulsion system axis 24) out from the structure base 50 at the exterior flow boundary 56, into the external environment 22, to a distal tip 58 of the respective guide vane 52, which may be unshrouded or shrouded. Each guide vane 52 is thereby configured as an un-ducted and/or unshrouded guide vane which is exposed to (e.g., disposed in) the surrounding external environment 22.

Referring to FIG. 2, each guide vane 52 may be configured to pivot about a respective vane pivot axis 60. This vane pivot axis 60 extends radially relative to the propulsion system axis 24. The vane pivot axis 60 of FIG. 2, for example, is arranged perpendicular to the propulsion system axis 24 when viewed, for example, in the longitudinal reference plane. Each guide vane 52 of FIG. 2 is operatively coupled with a vane actuation system 62, which vane actuation system 62 of FIG. 2 may be discrete from or integrated as part of the blade actuation system 48. The vane actuation system 62 is configured to pivot each guide vane 52 about its own respective vane pivot axis 60. By pivoting each guide vane 52 about its vane pivot axis 60, a pitch of the respective guide vane 52 may be changed. Note, while the vane pivot axis 60 is shown in FIG. 2 as being perpendicular to the propulsion system axis 24, it is contemplated that this vane pivot axis 60 may or may not be coincident with the propulsion system axis 24. Moreover, it is contemplated that each vane pivot axis 60 may alternatively be angularly offset from the propulsion system axis 24 by an acute angle or an obtuse angle when viewed, for example, in the longitudinal reference plane. Of course, it is contemplated that some or all of the guide vanes 52 may be alternatively moved to change the guide vane pitch. Moreover, it is contemplated that some or all of the guide vanes 52 may alternatively be fixed pitch guide vanes in other embodiments.

The guide vane structure 36 is described above as a fixed (e.g., non-rotatable) guide vane structure. It is contemplated, however, that the guide vane structure 36 may alternatively be selectively rotatable about the propulsion system axis 24. With such an arrangement, the aircraft propulsion system 20 may be configured as an open rotor propulsion system with a swirl recovery blade (SRB) open rotor architecture. More particularly, the aircraft propulsion system 20 may operate as: (A) a counter-rotating open rotor (CROR) propulsion system during a dual rotor mode of operation (e.g., when both the propulsor rotor 34 and the structure 36 are counter-rotating about the propulsion system axis 24); and (B) a single open rotor and swirl recovery vane (SRV) propulsion system during a single rotor mode of operation (e.g., when the propulsor rotor 34 is rotating and the structure 36 is rotationally fixed about the propulsion system axis 24). Note, when the guide vane structure 36 is configured to selectively rotate about the propulsion system axis 24, the moving guide vanes 52 operate as propulsor blades.

Referring to FIG. 1, the turbine engine 32 includes an inlet section 64, a compressor section 65, a combustor section 66, a turbine section 67 and an exhaust section 68. The compressor section 65 of FIG. 1 includes a low-pressure compressor (LPC) section 65A and a high-pressure compressor (HPC) section 65B. The turbine section 67 of FIG. 1 includes a high-pressure turbine (HPT) section 67A and a low-pressure turbine (LPT) section 67B. The turbine engine 32 also includes an (e.g., annular) engine flowpath 70 which extends longitudinally through the aircraft propulsion system 20 of FIG. 1 and its turbine engine 32 from a (e.g., annular) flowpath inlet 72 into the engine flowpath 70 to a (e.g., annular) combustion products exhaust 74 from the engine flowpath 70. The flowpath inlet 72 is also an airflow inlet into the aircraft propulsion system 20 of FIG. 1 and its turbine engine 32. The flowpath exhaust 74 is also a combustion products exhaust from the aircraft propulsion system 20 of FIG. 1 and its turbine engine 32. At least (or only) the LPC section 65A, the HPC section 65B, the combustor section 66, the HPT section 67A and the LPT section 67B collectively form a core 76 (e.g., a gas generator) of the turbine engine 32.

Each of the engine sections 65A, 65B, 67A and 67B includes a respective bladed rotor 78-81 (e.g., a ducted and/or shrouded engine rotor). Each of these engine rotors 78-81 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages longitudinally along the engine flowpath 70. Each of the rotor blades is connected to the respective rotor base. Each of the rotor blades projects radially (e.g., spanwise) out from the respective rotor base into the engine flowpath 70 and to a distal tip of the respective rotor blade.

The HPC rotor 79 is coupled to and rotatable with the HPT rotor 80. The HPC rotor 79 of FIG. 1, for example, is connected to the HPT rotor 80 by a high-speed shaft 84. At least (or only) the HPC rotor 79, the HPT rotor 80, and the high-speed shaft 84 collectively form a high-speed rotating structure 86 (e.g., a high-speed spool of the engine core 76). This high-speed rotating structure 86 of FIG. 1 and its members 79, 80, and 84 are rotatable about the propulsion system axis 24. However, in other embodiments, the high-speed rotating structure 86 and its members 79, 80, and 84 may alternatively be rotatable about another rotational axis which is (e.g., laterally and/or angularly) offset from the rotational axis of the propulsor rotor 34.

The LPC rotor 78 is coupled to and rotatable with the LPT rotor 81. The LPC rotor 78 of FIG. 1, for example, is connected to the LPT rotor 81 by a low-speed shaft 88. At least (or only) the LPC rotor 78, the LPT rotor 81, and the low-speed shaft 88 collectively form a low-speed rotating structure 90 (e.g., a low-speed spool of the engine core 76). This low-speed rotating structure 90 of FIG. 1 and its members 78, 81, and 88 are rotatable about the propulsion system axis 24. However, in other embodiments, the low-speed rotating structure 90 and its members 78, 81, and 88 may alternatively be rotatable about another rotational axis which is (e.g., laterally and/or angularly) offset from the rotational axis of the propulsor rotor 34.

The low-speed rotating structure 90 is coupled to the propulsor rotor 34 through a drivetrain 92. This drivetrain 92 may be configured as a geared drivetrain, where a geartrain 94 (e.g., a transmission, a speed change device, an epicyclic geartrain, etc.) is disposed between and operatively couples the propulsor rotor 34 to the low-speed rotating structure 90 and its LPC rotor 78 and its LPT rotor 81. With this arrangement, the propulsor rotor 34 may rotate at a different (e.g., slower) rotational speed than the low-speed rotating structure 90 and its LPC rotor 78 and its LPT rotor 81. Here, the propulsor rotor 34 and the low-speed rotating structure 90 may rotate in a common (the same) direction about the propulsion system axis 24 or in opposite directions about the propulsion system axis 24 depending, for example, upon the specific configuration of the geartrain 94. Alternatively, the drivetrain 92 may be configured as a direct-drive drivetrain, where the geartrain 94 is omitted. With such an arrangement, the propulsor rotor 34 rotates at a common (the same) rotational speed as the low-speed rotating structure 90 and its LPC rotor 78 and its LPT rotor 81.

The turbine engine 32 of FIG. 1 is described above with a particular two rotating structure arrangement. The present invention, however, is not limited to such an exemplary arrangement. For example, the LPC rotor 78 may be omitted to configure the LPT rotor 81 as a power turbine (PT) rotor for the propulsor rotor 34. In another example, the turbine engine 32 may also include another rotating structure (e.g., an intermediate speed spool) for the engine core 76.

During operation of the aircraft propulsion system 20 of FIG. 1, ambient air within the external environment 22 is propelled by the rotating propulsor rotor 34 in the downstream, aft direction towards the propulsion system aft end 28. A major portion (e.g., more than 50%) of this air bypasses the turbine engine 32 to provide forward thrust while a minor portion (e.g., less than 50%) of the air flows into the turbine engine 32. For example, an outer stream of the air propelled by the rotating propulsor rotor 34 flows axially across the guide vane structure 36 and outside of the housing structure 54 and the structure base 50 (e.g., along the exterior flow boundary 56). The guide vane structure 36 conditions (e.g., straightens out, de-swirls, etc.) the outer stream of air within the external environment 22 to enhance the forward thrust. By contrast, an inner stream of the air propelled by the rotating propulsor rotor 34 may bypass the guide vane structure 36 and enter the turbine engine 32 and its engine flowpath 70 through the flowpath inlet 72. The air entering the engine flowpath 70 through the flowpath inlet 72 may be referred to as "core air".

The core air is compressed by the LPC rotor 78 and the HPC rotor 79 and directed into a combustion chamber 100 (e.g., an annular combustion chamber) of a combustor 102 (e.g., an annular combustor) in the combustor section 66. Fuel is injected into the combustion chamber 100 by one or more fuel injectors 104 and mixed with the compressed core air to provide a fuel-air mixture. This fuel-air mixture is ignited and combustion products thereof flow through and sequentially drive rotation of the HPT rotor 80 and the LPT rotor 81. The rotation of the HPT rotor 80 and the LPT rotor 81 respectively drive rotation of the HPC rotor 79 and the LPC rotor 78 and, thus, compression of the core air. The rotation of the LPT rotor 81 also drives the rotation of the propulsor rotor 34 through the geartrain 94. The turbine engine 32 and its low-speed rotating structure 90 thereby power operation of (e.g., drive rotation of) the propulsor rotor 34 during aircraft propulsion system operation.

The engine sections 64-68 may be arranged sequentially along the propulsion system axis 24 and are housed within and/or formed by the housing structure 54. This housing structure 54 includes an engine case assembly 106 and a nacelle 108. The engine case assembly 106 houses one or more of the engine sections 65A-67B (e.g., the engine core 76). The engine case assembly 106 of FIG. 1, for example, extends axially along (e.g., axially overlaps) and extends circumferentially about (e.g., circumscribes) the engine sections 65A-67B and their respective bladed rotors 78-81. The engine case assembly 106 may also house the geartrain 94.

The nacelle 108 houses and provides an aerodynamic cover over the engine case assembly 106. The nacelle 108 of FIG. 1, for example, is disposed radially outboard of, extends axially along (e.g., axially overlaps) and extends circumferentially about (e.g., circumscribes) the engine core 76 and its engine case assembly 106. With the foregoing arrangement, the bladed rotors 78-81 are disposed within the housing structure 54. By contrast, the propulsor blades 42 and the guide vanes 52 are disposed (e.g., completely) outside of the housing structure 54.

The nacelle 108 of FIG. 2 includes an inlet structure 110 and an aft nacelle structure 112 (see also FIG. 1). The inlet structure 110 is disposed at an upstream, forward end 114 of the housing structure 54 next to and downstream of the propulsor rotor 34 and its propulsor blades 42. The inlet structure 110 is configured as an annular airflow splitter (e.g., an annular inlet lip of the nacelle 108) which splits the airflow propelled by the propulsor rotor 34 into the outer stream and the inner stream. An inner radial portion 116 of the inlet structure 110 of FIG. 2, for example, forms an outer peripheral boundary of the flowpath inlet 72 into the aircraft propulsion system 20 at the housing structure forward end 114. An outer radial portion 118 of the inlet structure 110 forms an upstream, forward axial section of the exterior flow boundary 56, upstream and forward of the guide vane structure 36 and its structure base 50. This outer portion 118 of the inlet structure 110 meets the inner portion 116 of the inlet structure 110 at the housing structure forward end 114. The aft nacelle structure 112 forms a downstream, aft axial section of the exterior flow boundary 56, downstream and aft of the guide vane structure 36 and its structure base 50. This aft nacelle structure 112 may include one or more nacelle cowls disposed to opposing lateral sides of the aircraft propulsion system 20. Each of these nacelle cowls may be configured to pivot or otherwise move from a stowed position (for propulsion system operation) to an open position (for accessing engine accessories and/or the engine core 76 during turbine engine maintenance, inspection or the like).

The engine case assembly 106 includes a plurality of interconnected engine case structures 120 collectively forming the engine case assembly 106. The engine case structures 120 include a front center body (FCB) 122. The front center body 122 is disposed at (e.g., on, adjacent, or proximate) the housing structure forward end 114 and, in particular, axially between the propulsor blades 42 and the low-pressure compressor section 65A. The front center body 122 of FIGS. 1 and 2 includes an outer radial case structure 124 and an inner radial case structure 126. The outer radial case structure 124 and the inner radial case structure 126 extend circumferentially about (e.g., completely around) the axis 24. The outer radial case structure 124 forms a portion of the inlet structure 110 and its inner radial portion 116. The inner radial case structure 126 is disposed radially inward of the outer radial case structure 124. The inner radial case structure 126 may circumscribe and support the geartrain 94. The outer radial case structure 124 and the inner radial case structure 126 form the flowpath inlet 72 radially therebetween. The front center body 122 may generally form the engine flowpath 70 from the flowpath inlet 72 to the low-pressure compressor section 65A. The engine case structures 120 may also include, but are not limited to, an intermediate case (IMC) 128, a mid-turbine frame (MTF) 130, and/or a turbine exhaust case (TEC) 132. The intermediate case 128 forms a portion of the engine flow path 70 between the low-pressure compressor section 65A and the high-pressure compressor section 65B. The mid-turbine frame 130 forms a portion of the engine flow path 70 between the high-pressure turbine section 67A and the low-pressure turbine section 67B. The turbine exhaust case 132 forms a portion of the engine flow path 70 downstream of the turbine section 67, for example, between the turbine section 67 and the flowpath exhaust 74.

Referring to FIG. 1, The aft nacelle structure 112 or, more generally, the housing structure 54 may also include an exhaust nozzle 134 which forms an outer peripheral boundary of the flowpath exhaust 74. The nacelle 108 may form a guide vane receptacle for the guide vane structure 36 wherein the guide vane structure 36 may mate with the housing structure 54. Herein, the term "receptacle" is used to describe an open space (e.g., unoccupied volume) in the aircraft propulsion system 20 inboard of the exterior flow boundary 56. This open space may or may not be defined by walls within the aircraft propulsion system 20. For example, a radial inner side (e.g., a bottom side) of the vane structure receptacle 136 may be formed by the engine case assembly 106, one or more mounting structures attached to the engine case assembly 106, and/or peripheral equipment mounted with the engine case assembly 106. In another example, an axial side of the vane structure receptacle 136 may be formed by various supports, frames, accessories and/or the like part of and/or housed radially beneath the nacelle structures 110, 112. The structure base 50 may be disposed within the vane structure receptacle 136 (see FIG. 2) such that the outer side of the structure base 50 may be flush with outer radial sides of the nacelle structures 110, 112 to collectively form the exterior flow boundary 56. With this arrangement, the guide vane structure 36 may be configured as a module 138 (see FIG. 2) which may be removed from or installed with the rest of the aircraft propulsion system 20 (e.g., propulsion system members 32, 34 and 54) as a single unit.

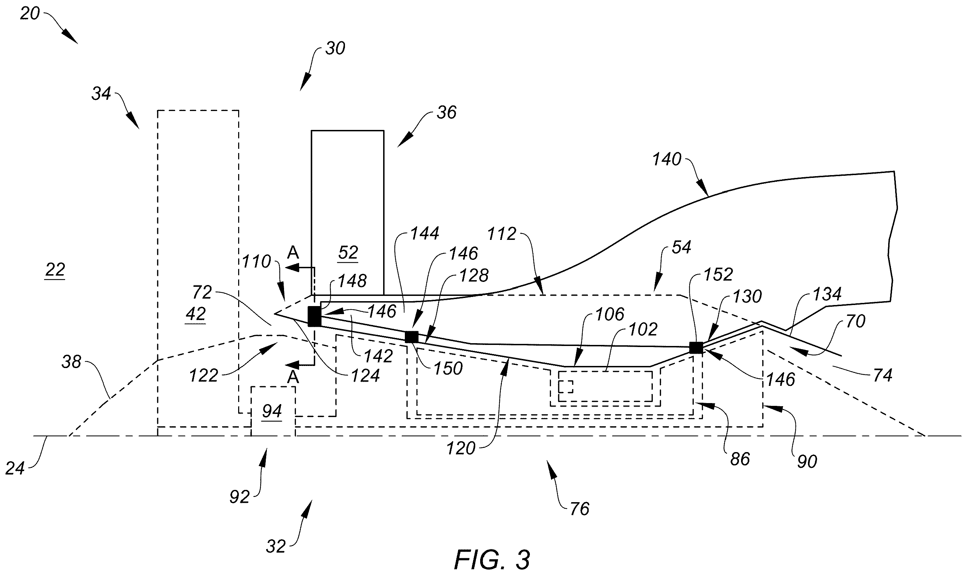

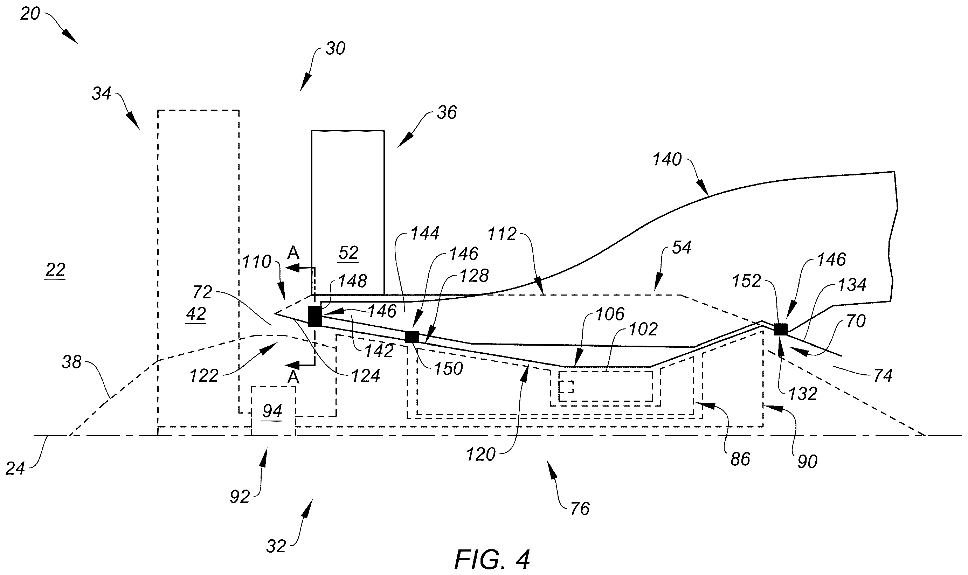

Referring to FIGS. 3 and 4, the propulsion system 20 is mounted onto (e.g., mechanically fastened to) a pylon structure 140. The housing structure 54 is mounted onto the pylon structure 140, which pylon structure 140 mounts the propulsion system 20 onto the aircraft (e.g., to a wing, fuselage, empennage, etc.). The pylon structure 140 of FIGS. 3 and 4 extends into the housing structure 54 wherein the pylon structure 140 is mounted to the engine case assembly 106 to structurally support the turbine engine 32. The pylon structure 140 includes an end portion 142 (e.g., an axial end portion) which is disposed axially coincident with the structure base 50 and the front center body 122. The structure base 50 may be mechanically fastened to the pylon structure 140 (e.g., with one or more fasteners) at the end portion 142. The pylon structure 140 of FIGS. 3 and 4 includes one or more beams 144 (e.g., cantilevered beams) arranged within the housing structure 54, which beams 144 include the end portion 142. The engine case assembly 106 is mounted to the pylon structure 140 (e.g., the beams 144) by a plurality of engine mount assemblies 146 of the turbine engine 32 forming various load paths between the turbine engine 32 (e.g., the engine case assembly 106) and the pylon structure 140. These load paths generally include vertical load paths, lateral load paths, thrust load paths, and torque load paths between the engine case assembly 106 and the pylon structure 140. The vertical load paths may be understood to act primarily in a vertical direction of the propulsion system 20 (e.g., for a typical attitude of the aircraft). The lateral load paths may act primarily in a lateral direction generally orthogonal to the vertical direction and the axis 24. The thrust load paths may act primarily in an axial direction relative to the axis 24. The torque load paths may act primarily in a circumferential direction relative to the axis 24. In operation, the mount assemblies 146 transmit loads between the turbine engine 32 and the pylon structure 140 along these vertical, lateral, thrust, and torque load paths.

The mount assemblies 146 of FIGS. 3 and 4 include a front mount assembly 148, an intermediate mount assembly 150, and a rear mount assembly 152 (e.g., relative to the axis 24). The front mount assembly 148 is mounted to and between the front center body 122 and the pylon structure 140 (e.g., the beams 144), for example, at the end portion 142. In particular, the front mount assembly 148 may be disposed axially coincident with the guide vane structure 36. The intermediate mount assembly 150 may be mounted to and between, for example, the intermediate case 128 and the pylon structure 140. The rear mount assembly 152 may be mounted to and between, for example, the mid-turbine frame 130 and the pylon structure 140, as shown in FIG. 3. Alternatively, the rear mount assembly 152 may be mounted to and between, for example, the turbine exhaust case 132 and the pylon structure 140, as shown in FIG. 4. The present invention, however, is not limited to the foregoing exemplary mounting configurations of the intermediate mount assembly 150 and the rear mount assembly 152.

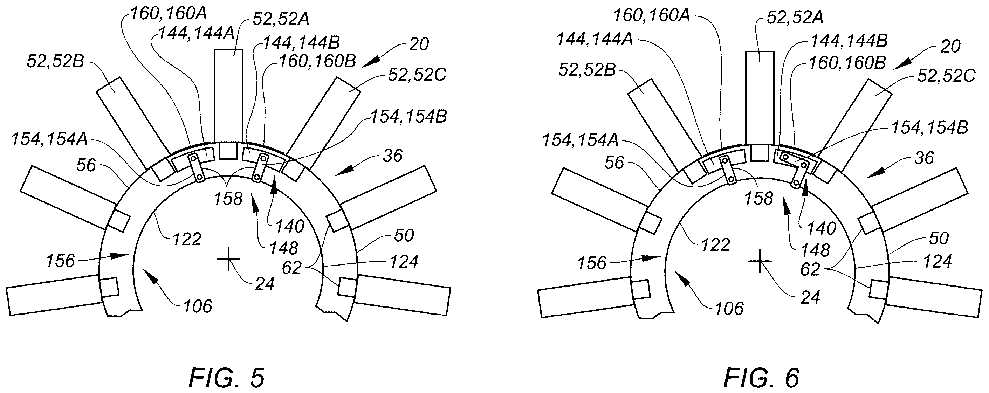

FIGS. 5 and 6 illustrate embodiments of the front mount assembly 148 along Line A-A of FIGS. 3 or 4. The front mount assembly 148 of FIGS. 5 and 6 includes a plurality of linkages 154 mechanically coupling the pylon structure 140 (e.g., the beams 144) with the front center body 122. The beams 144 of FIGS. 5 and 6 include a first beam 144A and a second beam 144B. The first beam 144A and the second beam 144B may be disposed on opposite circumferential sides of a top dead center (TDC) guide vane 52A of the guide vanes 52. For example, the first beam 144A of FIGS. 5 and 6 is disposed circumferentially between the top dead center guide vane 52A and a circumferentially adjacent guide vane 52B while the second beam 144B is disposed circumferentially between the top dead center guide vane 52A and another circumferentially adjacent guide vane 52C. The linkages 154 of FIGS. 5 and 6 include a first linkage 154A and a second linkage 154B. The first linkage 154A is mounted to and between the first beam 144A and the outer radial case structure 124 of the front center body 122, for example, at (e.g., on, adjacent, or proximate) an outer radial side 156 of the front center body 122. The second linkage 154B is mounted to and between the second beam 144B and the outer radial case structure 124 of the front center body 122, for example, at (e.g., on, adjacent, or proximate) the outer radial side 156. One or both of the linkages 154A-B may be pivotably mounted to the respective beams 144 and the front center body 122. For example, the first linkage 154A and the second linkage 154B of FIG. 5 may be configured as dogbone linkages 158 pivotably mounted to the first beam 144A and the second beam 144B, respectively, and the front center body 122. Alternatively, one or both of the linkages 154A-B may be fixedly mounted to the respective beams 144 and/or the front center body 122. For example, the second linkage 154B of FIG. 6 is fixedly mounted to the second beam 144B to restrict lateral movement of the turbine engine 32 (e.g., form a lateral load path between the engine case assembly 106 and the pylon structure 140).

The present invention mounting architecture of the propulsion system 20 facilitates a weight-efficient mount and pylon structure configuration relative to at least some conventional aircraft propulsion systems and, in particular, open rotor propulsion systems. The front mount assembly 148 at the guide vane structure 36 and mounted between the front center body 122 and the pylon structure 140 shifts the center of gravity of the propulsion system 20 axially between the front mount assembly 148 and the rear mount assembly 152, as opposed to outside of (e.g., forward of) the mount assemblies of at least some conventional open rotor aircraft propulsion systems as a result of the significant weight of the open rotor propulsor. The present invention configuration of the mount assemblies 146 further facilitates reduced bending moment of the turbine engine 32 during normal operation, thereby allowing tighter bladed rotor tip clearances and provides greater packaging space within the engine core 76.

Still referring to FIGS. 5 and 6, in some embodiments, the guide vane structure base 50 (or the nacelle 108) may include one or more detachable access panels 160 at the exterior flow boundary 56 and configured to facilitate access to the front mount assembly 148 from the exterior of the propulsion system 20. For example, the access panels 160 of FIGS. 5 and 6 include a first access panel 160A and a second access panel 160B. The first access panel 160A and the second access panel 160B may be disposed on opposite circumferential sides of the top dead center (TDC) guide vane 52A. For example, the first access panel 160A of FIGS. 5 and 6 may be disposed circumferentially between the top dead center guide vane 52A and the circumferentially adjacent guide vane 52B while the second access panel 160B may be disposed circumferentially between the top dead center guide vane 52A and the circumferentially adjacent guide vane 52C. In some embodiments, the top dead center guide vane 52A may be omitted from the guide vane structure 36 to further facilitate access to the front mount assembly 148 from the exterior of the propulsion system 20.

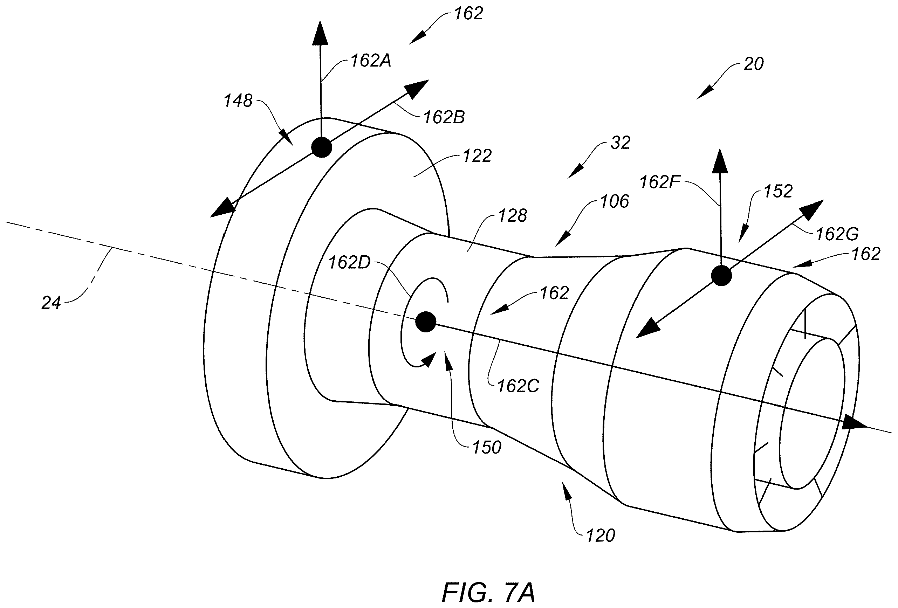

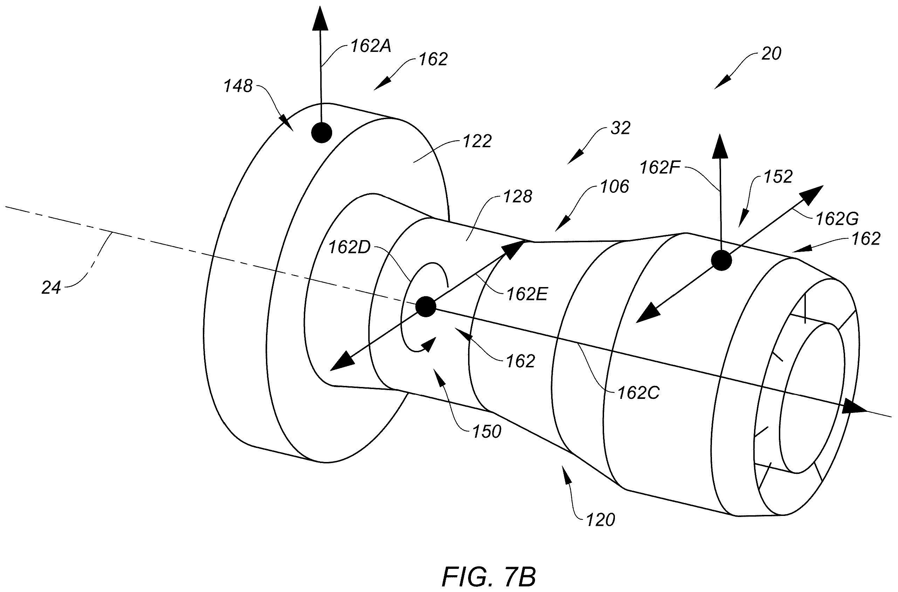

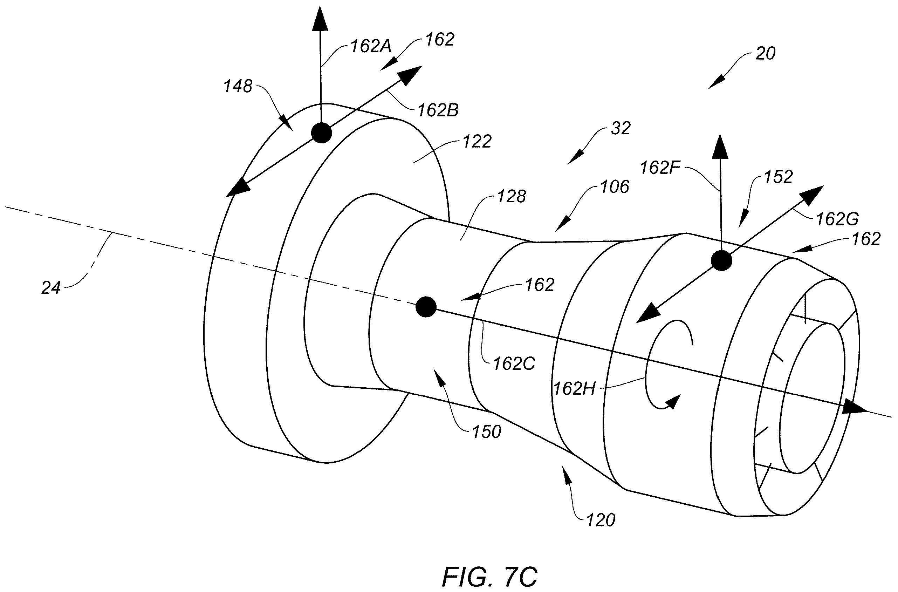

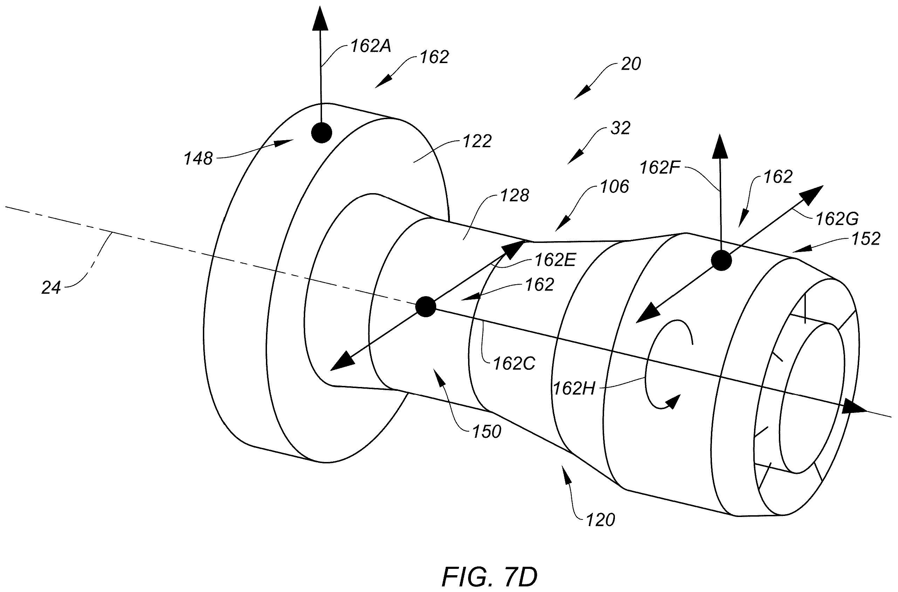

FIGS. 7A-D schematically illustrate exemplary load paths 162 of the mount assemblies 146 for mounting the propulsion system 20 to the pylon structure 140. The front mount assembly 148 forms a vertical load path 162A between the engine case assembly 106 (e.g., the front center body 122) and the pylon structure 140. As shown in FIGS. 7A and 7C, the front mount assembly 148 may additionally form a lateral load path 162B between the engine case assembly 106 (e.g., the front center body 122) and the pylon structure 140. The intermediate mount assembly 150 forms a thrust load path 162C between the engine case assembly 106 (e.g., the intermediate case 128) and the pylon structure 140. As shown in FIGS. 7A and 7B, the intermediate mount assembly 150 may additionally form a torque load path 162D between the engine case assembly 106 (e.g., the intermediate case 128) and the pylon structure 140. As shown in FIGS. 7B and 7D, the intermediate mount assembly 150 may additionally form a lateral load path 162E between the engine case assembly 106 (e.g., the intermediate case 128) and the pylon structure 140. The rear mount assembly 152 forms a vertical load path 162F and a lateral load path 162G between the engine case assembly 106 (e.g., the mid-turbine frame 130 or the turbine exhaust case 132)) and the pylon structure 140. As shown in FIGS. 7C and 7D, the rear mount assembly 152 may from a torque load path 162H between the engine case assembly 106 (e.g., the mid-turbine frame 130 or the turbine exhaust case 132)) and the pylon structure 140.

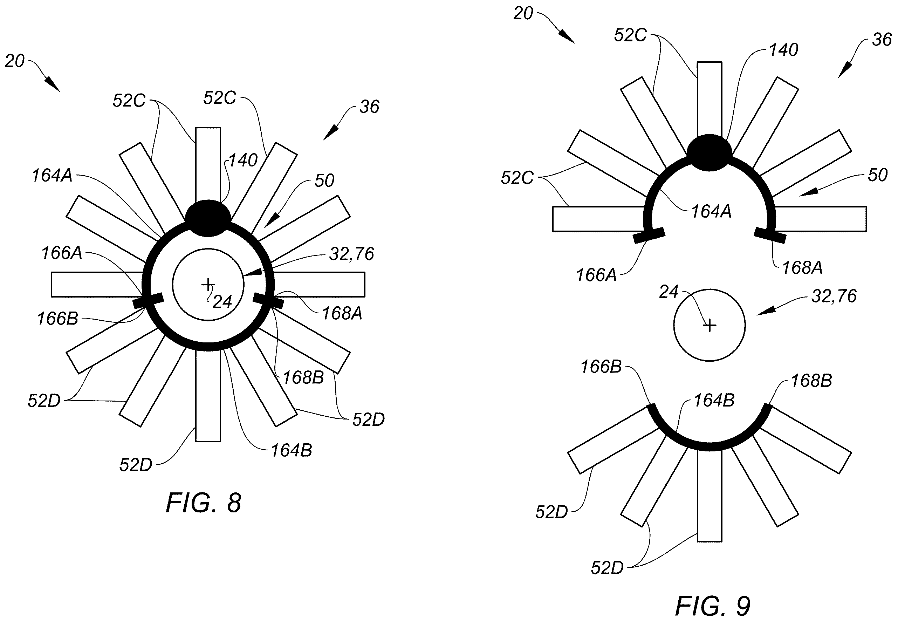

In some embodiments, referring to FIGS. 8 and 9, the structure base 50 may be circumferentially segmented into a plurality of structure segments 164A and 164B (generally referred to as "164"). Each of these structure segments 164A, 164B extends circumferentially about the propulsion system axis 24 and the turbine engine 32 between circumferentially opposing ends 166A, 166B (generally referred to as "166") and 168A, 168B (generally referred to as "168") of the respective structure segment 164. The second structure segment 164B, for example, may extend between ninety (90°) and three-hundred degrees (300°) inclusive about the propulsion system axis 24 between its opposing circumferential ends 166B and 168B. More particularly, the second structure segment 164B may extend between one-hundred and sixty degrees (160°) and two-hundred degrees (200°) inclusive about the propulsion system axis 24 between its opposing circumferential ends 166B and 168B. The first structure segment 164A may then extend a remainder of the full three-hundred and sixty degree hoop of the structure base 50 about the propulsion system axis 24 between its opposing circumferential ends 166A and 168A. For example, the first structure segment 164A extends sixty degrees (60°) centered about the pylon structure 140 and the second structure segment 164B extends three-hundred degrees (300°) to mate 166A to 166B, and 168A to 168B.

The first structure segment 164A of FIG. 8 (e.g., a top structure segment, a fixed structure segment, etc.) may be mounted to, integrated with and/or otherwise connected to the pylon structure 140. The second structure segment 164B of FIG. 8 (e.g., a bottom structure segment, a removable structure segment, etc.) is disposed diametrically opposite the first structure segment 164A. At the segment first ends 166, the second structure segment 164B is attached (e.g., mechanically fastened) to the first structure segment 164A. Similarly, at the segment second ends 168, the second structure segment 164B is attached (e.g., mechanically fastened) to the first structure segment 164A. With this arrangement, referring to FIG. 9, the second structure segment 164B may be detached from the first structure segment 164A to remove the second structure segment 164B from the aircraft propulsion system 20 and provide access to the turbine engine 32 and its engine core 76 for maintenance, inspection and/or otherwise. The removal of the second structure segment 164B may also provide an opening through which the turbine engine 32 and its engine core 76 and/or other turbine engine components, etc. may also be removed from or installed with the aircraft propulsion system 20.

Each structure segment 164A, 164B of FIG. 8 is associated with a set of one or more of the guide vanes 52C, 52D (generally referred to as "52"). Each of the first set guide vanes 52C is connected to and projects radially out from the first structure segment 164A. Each of the second set guide vanes 52D is connected to and projects radially out from the second structure segment 164B. Note, while each set of the guide vanes 52 in FIG. 9 is shown with a different number of the guide vanes 52, it is contemplated that the guide vane sets may alternatively be configured with a common number of the guide vanes 52.

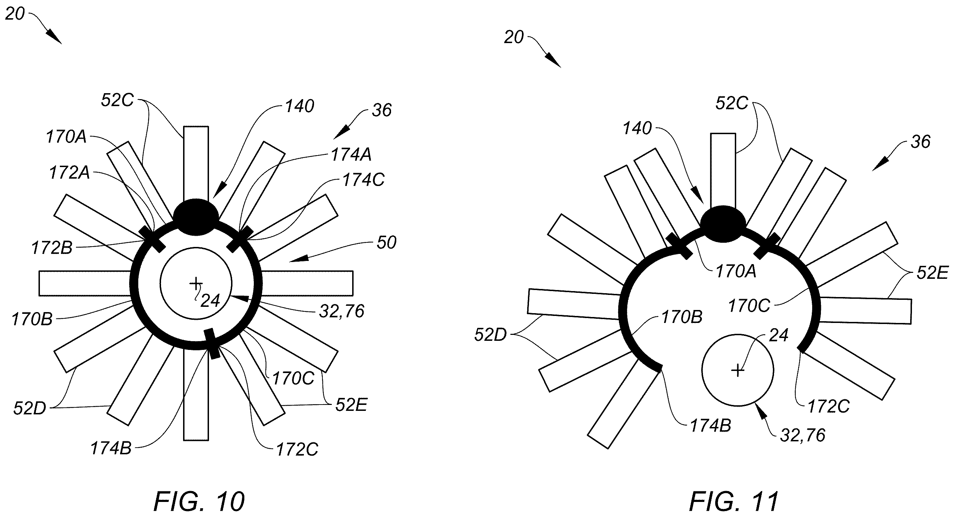

In some embodiments, referring to FIGS. 10 and 11, the structure base 50 may be circumferentially segmented into a plurality of structure segments 170A-C (generally referred to as "170"). Each of these structure segments 170A-C extends circumferentially about the propulsion system axis 24 and the turbine engine 32 between circumferentially opposing ends 172A-C (generally referred to as "172") and 174A-C (generally referred to as "174") of the respective structure segment 170A-C. Here, the ends 172A and 174A are opposing ends of the first structure segment 170A. The ends 172B and 174B are opposing ends of the second structure segment 170B. The ends 172C and 174C are opposing ends of the third structure segment 170C. Each of the structure segments 170B, 170C, for example, may extend between forty-five degrees (45°) and one-hundred and sixty degrees (160°) inclusive about the propulsion system axis 24 between its opposing circumferential ends 172B and 174B, 172C and 174C. More particularly, each structure segment 170B, 170C may extend between sixty degrees (60°) and one-hundred and twenty degrees (120°) inclusive about the propulsion system axis 24 between its opposing circumferential ends 172B and 174B, 172C and 174C. The first structure segment 170A may then extend a remainder of the full three-hundred-and-sixty-degree hoop of the structure base 50 about the propulsion system axis 24 between its opposing circumferential ends 172A and 174A.

The first structure segment 170A of FIG. 10 (e.g., a top structure segment, a fixed structure segment, etc.) may be mounted to, integrated with and/or otherwise connected to the pylon structure 140. The other structure segments 170B, 170C of FIG. 10 (e.g., side structure segments, movable structure segments, etc.) are collectively disposed diametrically opposite the first structure segment 170A. At the segment first ends 172A and 172B, the second structure segment 170B is movably attached (e.g., pivotably attached) to the first structure segment 170A. Similarly, at the segment second ends 174A and 174C, the third structure segment 170C is movably attached (e.g., pivotably attached) to the first structure segment 170A. At the second structure second end 174B and at the third structure first end 172C, the structure segments 170B and 170C are removably attached (e.g., mechanically fastened, latched, etc.) to one another at a joint between the second structure segment 170B and the third structure segment 170C. With this arrangement, the second structure segment 170B and/or the third structure segment 170C may each be pivoted or otherwise moved from a stowed position (e.g., see FIG. 10 position for propulsion system operation) to an open position (e.g., see FIG. 11 position for turbine engine maintenance, inspection, replacement, etc.). The opening of the structure sections 170B and/or 170C provides access to the turbine engine 32 and its engine core 76 for maintenance, inspection and/or otherwise. The opening of the structure sections 170B and/or 170C may also provide an opening through which the turbine engine 32 and its engine core 76 and/or other turbine engine components, etc. may also be removed from or installed with the aircraft propulsion system 20 (e.g., as illustrated in FIG. 11).

Each structure segment 170A-C of FIG. 10 is associated with a set of one or more of the guide vanes 52C-E (generally referred to as "52"). Each of the first set guide vanes 52C is connected to and projects radially out from the first structure segment 170A. Each of the second set guide vanes 52D is connected to and projects radially out from the second structure segment 170B. Each of the third set guide vanes 52E is connected to and projects radially out from the third structure segment 170C. Note, while each set of the guide vanes 52 in FIG. 10 is shown with a different number of the guide vanes 52, it is contemplated that any two or more of the guide vane sets may alternatively be configured with a common number of the guide vanes 52.

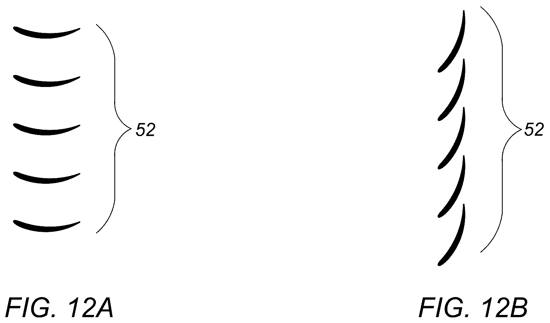

In some embodiments, referring to FIGS. 12A and 12B, some or all of the guide vanes 52 may each be pivotable between a feather position (see FIG. 12A) and an access position (e.g., see FIG. 12B). Between the feather position of FIG. 12A and the access position of FIG. 12B, each respective guide vane 52 may pivot at least or more than sixty degrees (60°) or seventy degrees (70°) (e.g., between seventy-five degrees (75°) and eighty-five degrees (85°), inclusive). By pivoting the respective guide vanes 52 to the access position of FIG. 12B, these guide vanes 52 may be positioned to facilitate nesting of the guide vanes 52 while the respective structure segment 170B, 170C (see FIGS. 10 and 11) is opened. Of course, in other embodiments, it is contemplated that the structure segment(s) 170B, 170C (see FIGS. 10 and 11) may be opened without pivoting the respective guide vanes 52 to a particular position. In still other embodiments, it is contemplated that one or more of the respective guide vanes 52 may be removed to provide additional room for opening the structure segment(s) 170B, 170C (see FIGS. 10 and 11).

In some embodiments, referring to FIG. 2, the vane actuation system 62 may be configured as part of the guide vane structure module 138. However, it is also contemplated that the vane actuation system 62 may alternatively be installed independent of the guide vane structure 36.

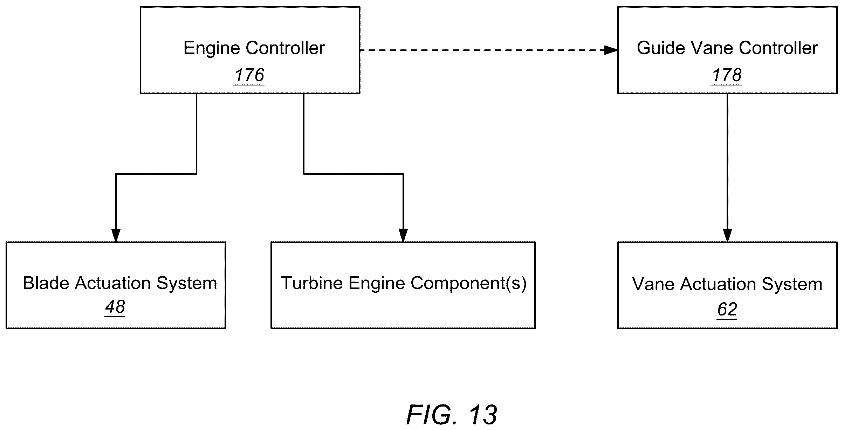

In some embodiments, referring to FIG. 13, the aircraft propulsion system 20 may be configured with multiple discrete controllers such as an onboard engine controller 176 and a guide vane controller 178. Examples of the engine controller 176 include, but are not limited to, an electronic engine controller (EEC), an electronic control unit (ECU), a full-authority digital engine controller (FADEC), etc. This engine controller 176 is configured to control and/or monitor operation of various turbine engine component(s) as well as various other propulsion system members including the blade actuation system 48. By contrast, the guide vane controller 178 is configured to control operation of the vane actuation system 62. While this guide vane controller 178 is physically discrete from the engine controller 176 and may (or may not) be located remote from the engine controller 176, the guide vane controller 178 may be in signal communication with (e.g., hardwired and/or wirelessly coupled to) the engine controller 176 to coordinate operation of the various actuation systems (e.g., 48 and 62 of FIG. 2). Of course, in other embodiments, it is contemplated that the single engine controller 176 may also (e.g., directly) control operation of the vane actuation system 62.

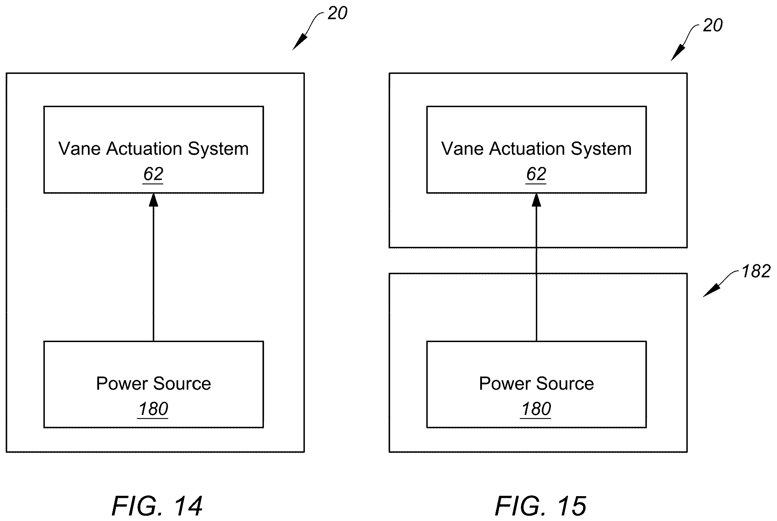

In some embodiments, referring to FIG. 14, the vane actuation system 62 may be powered by a power source 180 onboard the aircraft propulsion system 20. The vane actuation system 62, for example, may be electrically powered by a generator and/or electrical power bus onboard the aircraft propulsion system 20. In another example, the vane actuation system 62 may be pneumatically powered by an air system (e.g., a bleed system) onboard the aircraft propulsion system 20. In still another example, the vane actuation system 62 may be fluidly powered (e.g., hydraulically powered) by a fluid system onboard the aircraft propulsion system 20. Here, a working fluid for the fluid system may be lubricant, coolant, fuel, or the like. In other embodiments, referring to FIG. 15, the power source 180 may be remote from the aircraft propulsion system 20. The power source 180 of FIG. 15, for example, may be arranged in at least one member 182 of an airframe of the aircraft (e.g., in an aircraft fuselage, in an aircraft wing and/or in the pylon structure 140).

While the principles of the invention have been described above in connection with specific apparatuses and methods, it is to be clearly understood that this description is made only by way of example and not as limitation on the scope of the invention. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this invention by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present invention is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the inventions may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the inventions--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An assembly for an aircraft propulsion system (20), the assembly comprising:
an open propulsor rotor (34) comprising a plurality of open propulsor blades (42) arranged circumferentially around an axis (24), each of the plurality of open propulsor blades (42) projecting radially out into an environment (22) external to the aircraft propulsion system (20);
a housing structure (54) comprising an upstream housing end (114), the upstream housing end (114) disposed downstream of the plurality of open propulsor blades (42), the housing structure (54) comprising an engine case assembly (106) and a nacelle structure (108), the engine case assembly (106) comprising a front center body (122) at the upstream housing end (114), the front center body (122) comprising an outer radial side (156), the nacelle structure (108) disposed radially outboard of the engine case assembly (106) and covering the outer radial side (156), the nacelle structure (108) forming at least a portion of an exterior flow boundary (56) for the aircraft propulsion system (20) that borders the environment (22) external to the aircraft propulsion system (20);
a guide vane structure (36) comprising a guide vane structure base (50) disposed at the exterior flow boundary (56);
a front mount assembly (148) mounted on the outer radial side (156), the front mount assembly (148) disposed axially coincident with the guide vane structure (36), the front mount assembly (148) including at least one pylon attachment linkage (154);
a compressor section (65), a combustor section (66), and a turbine section (67) each housed within the engine case assembly (106), the turbine section (67) comprising a turbine rotor (81) operatively coupled to the open propulsor rotor (34), and the turbine rotor (81) configured to drive rotation of the open propulsor rotor (34) about the axis (24); and
a flowpath (70) extending through the compressor section (65), the combustor section (66), and the turbine section (67) from an inlet (72) into the flowpath (70) to an exhaust (74) from the flowpath (70), the inlet (72) formed by the front center body (122).

2. The assembly of claim 1, wherein the guide vane structure (36) further comprises a plurality of open guide vanes (52) projecting radially outward from the guide vane structure base (50).

3. The assembly of claim 2, wherein the guide vane structure base (50) comprises at least one front mount assembly access panel (160) at the exterior flow boundary (56), and the at least one front mount assembly access panel (160) is disposed adjacent the front mount assembly (148),
wherein optionally:
each of the at least one front mount assembly access panel (160) is disposed between a respective pair of circumferentially adjacent open guide vanes (52A, 52B, 52C) of the plurality of open guide vanes (52).

4. The assembly of any preceding claim, further comprising a pylon structure (140), the front mount assembly (148) mounting the front center body (122) to the pylon structure (140).

5. The assembly of claim 4, wherein:
the pylon structure (140) comprises at least one beam (144) extending through the housing structure (54), the at least one beam (144) forms an end portion (142) of the pylon structure (140) between the front center body (122) and the guide vane structure base (50), and the front mount assembly (148) is mounted to the pylon structure (140) at the end portion (142); and/or
the at least one pylon attachment linkage (154) mounts the front center body (122) to the pylon structure (140).

6. The assembly of claim 4 or 5, wherein the front mount assembly (148) forms a first vertical load path (162A) between the engine case assembly (106) and the pylon structure (140).

7. The assembly of claim 6, further comprising an intermediate mount assembly (150) and a rear mount assembly (152), the intermediate mount assembly (150) and the rear mount assembly (152) further mounting the engine case assembly (106) to the pylon structure (140).

8. The assembly of claim 7, wherein:
the engine case assembly (106) further comprises an intermediate case (128) and a mid-turbine frame (130), the intermediate case (128) is disposed at the compressor section (65), the mid-turbine frame (130) is disposed at the turbine section (67), the intermediate mount assembly (150) mounts the intermediate case (128) to the pylon structure (140), and the rear mount assembly (152) mounts the mid-turbine frame (130) to the pylon structure (140); and/or
the engine case assembly (106) further comprises an intermediate case (128) and a turbine exhaust case (132), the intermediate case (128) is disposed at the compressor section (65), the turbine exhaust case (132) forms a portion of the flowpath (70) downstream of the turbine section (67), the intermediate mount assembly (150) mounts the intermediate case (128) to the pylon structure (140), and the rear mount assembly (152) mounts the turbine exhaust case (132) to the pylon structure (140).

9. The assembly of claim 7 or 8, wherein the front mount assembly (148) further forms a first lateral load path (162B) between the engine case assembly (106) and the pylon structure (140), the intermediate mount assembly (150) forms a torque load path (162D) and a thrust load path (162C) between the engine case assembly (106) and the pylon structure (140), and the rear mount assembly (152) forms a second vertical load path (162F) and a second lateral load path (162G) between the engine case assembly (106) and the pylon structure (140).

10. The assembly of any of claims 7 to 9, wherein the intermediate mount assembly (150) forms a torque load path (162D), a thrust load path (162C), and a first lateral load path (162E) between the engine case assembly (106) and the pylon structure (140), and the rear mount assembly (152) forms a second vertical load path (162F) and a second lateral load path (162G) between the engine case assembly (106) and the pylon structure (140).

11. The assembly of any of claims 7 to 10, wherein the front mount assembly (148) further forms a first lateral load path (162B) between the engine case assembly (106) and the pylon structure (140), the intermediate mount assembly (150) forms a thrust load path (162C) between the engine case assembly (106) and the pylon structure (140), and the rear mount assembly (152) forms a second vertical load path (162F), a second lateral load path (162G), and a torque load path (162H) between the engine case assembly (106) and the pylon structure (140).

12. The assembly of an of claims 7 to 11, wherein the intermediate mount assembly (150) forms a thrust load path (162C) and a first lateral load path (162E) between the engine case assembly (106) and the pylon structure (140), and the rear mount assembly (152) forms a second vertical load path (162F), a second lateral load path (162G), and a torque load path (162H) between the engine case assembly (106) and the pylon structure (140).

13. An assembly for an aircraft propulsion system (20), comprising:
a propulsor rotor (34) comprising a plurality of propulsor blades (42) arranged circumferentially around an axis (24);
a housing structure (54) comprising an upstream housing end (114), the upstream housing end (114) disposed downstream of the plurality of propulsor blades (42), the housing structure (54) comprising an engine case assembly (106) and a nacelle structure (108), the nacelle structure (108) disposed radially outboard of the engine case assembly (106), the nacelle structure (108) forming an exterior flow boundary (56) for the aircraft propulsion system (20);
a guide vane structure (36) comprising a guide vane structure base (50) disposed at the exterior flow boundary (56);
a front mount assembly (148) disposed radially between the engine case assembly (106) and the guide vane structure base (50), the front mount assembly (148) mounted on the engine case assembly (106);
a compressor section (65), a combustor section (66), and a turbine section (67) each housed within the engine case assembly (106), the turbine section (67) comprising a turbine rotor (81) operatively coupled to the open propulsor rotor (34), and the turbine rotor (81) configured to drive rotation of the open propulsor rotor (34) about the axis (24); and
a flowpath (70) extending through the compressor section (65), the combustor section (66), and the turbine section (67) from an inlet (72) into the flowpath (70) to an exhaust (74) from the flowpath (70), the inlet (72) formed by the engine case assembly (106) at the upstream housing end (114).

14. The assembly of claim 13, further comprising a pylon structure (140) and a turbine engine (32), the turbine engine (32) comprising the compressor section (65), the combustor section (66), the turbine section (67), the flowpath (70) and the engine case assembly (106), the front mount assembly (148) mounting the engine case assembly (106) to the pylon structure (140),
wherein, optionally:
the pylon structure (140) comprises at least one beam (144) extending through the housing structure (54), the at least one beam (144) forms an end portion (142) of the pylon structure (140) radially between the front mount assembly (148) and the plurality of open guide vanes (52), and the front mount assembly (148) is mounted to the pylon structure (140) at the end portion (142).

15. An assembly for an aircraft propulsion system (20), the assembly comprising:
an open propulsor rotor (34) comprising a plurality of open propulsor blades (42) arranged circumferentially around an axis (24), each of the plurality of open propulsor blades (42) projecting radially out into an environment (22) external to the aircraft propulsion system (20);
a housing structure (54) comprising an upstream housing end (114), the upstream housing end (114) disposed downstream of the plurality of open propulsor blades (42), the housing structure (54) comprising an engine case assembly (106) and a nacelle structure (108), the engine case assembly (106) comprising a front center body (122) at the upstream housing end (114), the nacelle structure (108) disposed radially outboard of the engine case assembly (106), the nacelle structure (108) forming an exterior flow boundary (56) for the aircraft propulsion system (20) that borders the environment (22) external to the aircraft propulsion system (20);
an open guide vane structure (36) comprising a guide vane structure base (50), the guide vane structure base (50) mounted at the nacelle structure (108) and further forming the exterior flow boundary (56);
a front mount assembly (148) mounted on the front center body (122) between the front center body (122) and the guide vane structure base (50), the front mount assembly (148) including at least one pylon attachment linkage (154) mounted to the front center body (122);
a compressor section (65), a combustor section (66), and a turbine section (67) each housed within the engine case assembly (106), the turbine section (67) comprising a turbine rotor (81) operatively coupled to the open propulsor rotor (34), and the turbine rotor (81) configured to drive rotation of the open propulsor rotor (34) about the axis (24); and
a flowpath (70) extending through the compressor section (65), the combustor section (66), and the turbine section (67) from an inlet (72) into the flowpath (70) to an exhaust (74) from the flowpath (70), the inlet (72) formed by the front center body (122),
wherein, optionally:
the assembly further comprises a pylon structure (140) and a turbine engine (32), the turbine engine (32) comprising the compressor section (65), the combustor section (66), the turbine section (67), the flowpath (70) and the engine case assembly (106), the front mount assembly (148) mounting the front center body (122) to the pylon structure (140).
